Europäisches Patentamt

**European Patent Office**

**Office européen des brevets**

(11) Veröffentlichungsnummer: **0 059 793**

**A1**

(12) **EUROPÄISCHE PATENTANMELDUNG**

(21) Anmeldenummer: **81109276.6**

(22) Anmeldetag: **29.10.81**

(51) Int. Cl.³: **G 01 P 15/09**

(30) Priorität: **06.03.81 DE 8106455 U**

(43) Veröffentlichungstag der Anmeldung:
**15.09.82 Patentblatt 82/37**

(84) Benannte Vertragsstaaten:
**AT BE CH DE FR GB IT LI NL SE**

(71) Anmelder: **SIEMENS AKTIENGESELLSCHAFT Berlin
und München
Postfach 22 02 61
D-8000 München 22(DE)**

(72) Erfinder: **Keller, Werner, Ing.grad.
Königsberger Weg 2
D-8037 Olching(DE)**

(54) **Beschleunigungssensor.**

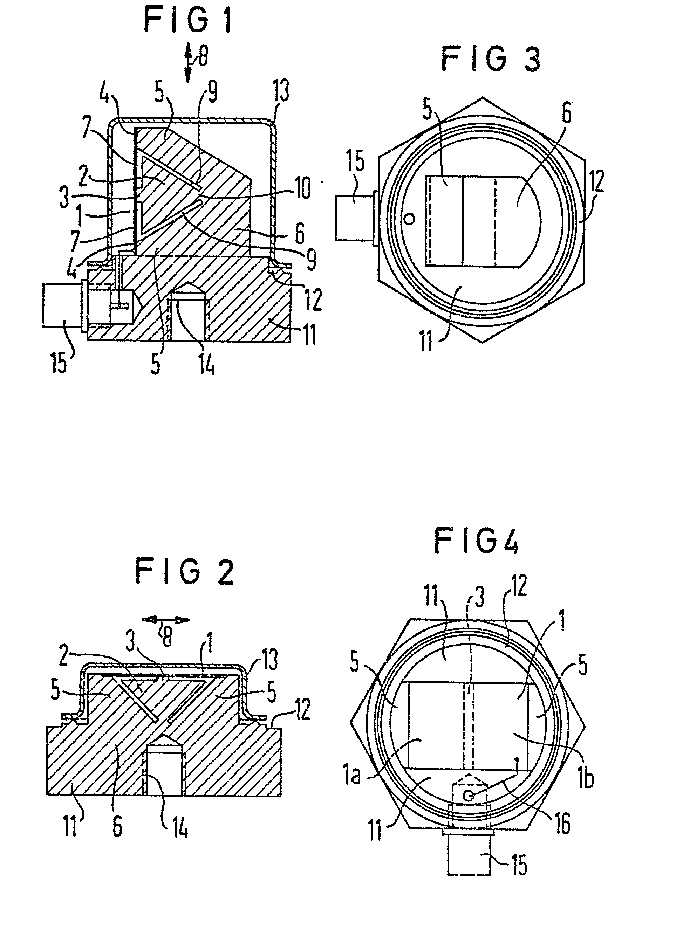

(57) Die in dem Beschleunigungssensor verwendete piezo-elektrische Platte (1) ist über eine mittlere Befestigungszone (3) mit einer aus einem Metallklotz freigeschnittenen seismischen Masse (2) und mit ihren hierzu parallelen Rändern auf der Seite der seismischen Masse mit durch den Freischnitt erhaltenen Haltearmen (5) verbunden, so daß ein gegen pyroelektrische Störungen kompensierter Sensor mit nur zweiteiligem Aufbau (Piezoplatte, Halterung mit Masse) erhalten wird (Fig. 1).

FIG 1

0059793

SIEMENS AKTIENGESELLSCHAFT
Berlin und München

Unser Zeichen
VPA 81 P 6845 E

Beschleunigungssensor

Die Erfindung bezieht sich auf einen Beschleunigungssensor mit einem zwischen einem Halteorgan und wenigstens einer mit Elektroden versehenen piezoelektrischen Platte aufgehängten Massekörper, der über quer zur Beschleunigungsrichtung verlaufende streifenförmige bzw. stegartige Befestigungszonen einerseits einstückig mit dem Halteorgan und andererseits mit der parallel zur Beschleunigungsrichtung angeordneten piezoelektrischen Platte verbunden ist.

Ein plattenförmiges, piezoelektrisches Wandlerelement ist z.B. aus der US-PS 38 99 698 bekannt. Bei auf die Platte einwirkenden mechanischen Kräften werden Potentialdifferenzen zwischen Elektroden verursacht, die auf den beiden Seiten der piezoelektrischen Platte vorgesehen sind. Durch ein Abgreifen und Auswerten dieser Potentialdifferenzen können daher auf die Platte einwirkende Kräfte zur Anzeige gebracht werden.

Aufgabe der Erfindung ist es, einen Beschleunigungssensor zur schaffen,der eine piezoelektrische Platte enthält und besonders einfach aufgebaut ist.

Erfindungsgemäß ergibt sich die Lösung dieser Aufgabe dadurch, daß zwischen piezoelektrischer Platte und Massekörper nur eine einzige Befestigungszone in einer Symmetrieebene der Platte vorgesehen ist.

Auf diese Weise kann, wie sich im folgenden noch zeigen wird, der Aufbau des Sensors wesentlich vereinfacht werden.

Rt 1 Obh / 6.Okt. 1981

0059793

In weiterer Ausgestaltung der Erfindung ist vorgesehen, daß die piezoelektrische Platte an ihren zu der Befestigungszone zwischen Platte und Massekörper parallelen Rändern auf der Seite des Massekörpers an auf dieser Seite vorgesehenen Haltearmen des Halteorganes fixiert ist, daß die Haltearme mit dem Halteorgan einstückig ausgebildet sind, und daß die piezoelektrische Platte zwischen ihrer Befestigungszone mit dem Massekörper und ihren an den Haltearmen fixierten Rändern entgegengesetzte Polarisationsrichtungen aufweist und daß ein auf der vom Massekörper abgewandten Seite der piezoelektrischen Platte vorgesehener Elektrodenbelag gegenüber den Haltearmen, dem Halteorgan und dem Massekörper isoliert ausgebildet ist, während die Gegenelektroden mit den Haltearmen bzw. dem Halteorgan elektrisch verbunden sind.

Auf diese Weise befinden sich vorteilhaft Massekörper und Haltearme auf ein und derselben Seite der piezoelektrischen Platte, wodurch eine problemlose, leicht automatisierbare und damit kostengünstige Montage der piezoelektrischen Platte an den Haltearmen des Halteorganes und an dem Massekörper ermöglicht wird. Außerdem lassen sich nun die Auflageflächen der piezoelektrischen Platte an den Haltearmen und dem Massekörper in einem Arbeitsgang herstellen, wodurch ein Fluchten dieser Flächen ohne Toleranzprobleme besonders begünstigt wird. Dadurch wird auch eine unbeabsichtigte Verspannung der piezoelektrischen Platte, die sonst möglich wäre, sicher vermieden.

Schließlich kann bei dem Beschleunigungssensor entsprechend der Erfindung noch vorgesehen sein, daß der sich zwischen dem Halteorgan und der piezoelektrischen Platte quer zur Beschleunigungsrichtung keilförmig erweiternde Massekörper lediglich durch schlitzförmige Einschnitte, die bis zur Befestigungszone zwischen Massekörper und Halteorgan verlaufen, aus dem aus einem Metallklotz bestehenden Halteorgan unter Bildung der Haltearme freigeschnitten ist, daß das Halteorgan eine Basisplatte mit einem Freirand aufweist und daß mit dem Freirand eine Blechkappe verbunden ist, und daß die Basisplatte mit Befestigungsausnehmungen und/oder Vorsprüngen, sowie mit einer Anschlußbuchse versehen ist.

Massekörper und Haltearme lassen sich auf diese Weise relativ unkompliziert aus einem massiven Metallklotz herausarbeiten und durch Verschweißen der Blechkappe mit dem Freirand der Basisplatte wird ein gegenüber Umwelteinflüssen geschützter Beschleunigungssensor erhalten, der sich aus nur drei Teilen zusammensetzt, nämlich a) dem Halteorgan mit dem Massekörper, der Basisplatte und den Haltearmen; b) der piezoelektrischen Platte; und c) der Blechkappe.

Nachfolgend werden Ausführungsbeispiele der Erfindung anhand von vier Figuren noch näher erläutert.

Dabei zeigen

Fig. 1 und Fig. 2    zwei Beschleunigungssensoren, jeweils von der Seite gesehen und im Schnitt dargestellt, und die

Fig. 3 und Fig. 4    die beiden Beschleunigungssensoren entsprechend den Figuren 1 und 2 jeweils von oben gesehen mit abgenommener Blechkappe.

Im einzelnen ist den Figuren zu entnehmen, daß die Beschleunigungssensoren auf einem massiven Metallklotz aufbauen, mit einer den Umriß eines regelmäßigen Sechsecks aufweisenden Basisplatte 11 und einem von einer der großen Oberflächen der Basisplatte 11 abstehenden Halteorgan 6, das als massives Teil mit einem gegenüber der Basisplatte 11 geringeren Querschnitt einstückig mit dieser zusammenhängt und aus dem durch zwei schlitzförmige Einschnitte 9, Haltearme 5 für die piezoelektrische Platte 1 und ein Massekörper 2 herausgearbeitet sind.

In Beschleunigungsrichtung 8 gesehen befindet sich dabei der Massekörper 2 zwischen den beiden Haltearmen 5 und ist von diesen durch die Einschnitte 9 getrennt.

In der Ausführungsform entsprechend Fig. 1 geht der untere Haltearm in Beschleunigungsrichtung 8 unmittelbar in die Basisplatte 11 über, während beim Ausführungsbeispiel entsprechend Fig. 2 beide Haltearme quer zur Beschleunigungsrichtung 8 mit der Basisplatte 1 zusammenhängen.

Durch die V-förmige Anordnung der Einschnitte 9 erweitert sich der Massekörper quer zur Beschleunigungsrichtung 8 und zur piezoelektrischen Platte 1 hin keilförmig, so daß das max. Moment des Massekörpers sich auf der Seite der piezoelektrischen Platte 1 befindet. Auf der von der piezoelektrischen Platte 1 abgewandten Seite nähern sich die Einschnitte 9 so weit einander an, daß nur eine schmale stegartige Zone 10 den Massekörper 2 mit dem Halteorgan 6 verbindet, um die der Massekörper 2 in geringem Maße pendeln kann. Auf der Seite der piezoelektrischen Platte 1 weist der Massekörper 2 einen stegartigen Vorsprung 3 auf, der sich quer zur Beschleunigungsrichtung 8 über die gesamte Breite derjenigen Seite des Massekörpers erstreckt, die der piezoelektrischen Platte 1 zugewandt ist. Mit diesem stegartigen Ansatz 3 ist der Massekörper 2 an der piezoelektrischen Platte 1 befestigt, z.B. mit Hilfe einer Lot- oder Klebeverbindung. Der stegartige Vorsprung 3 des Massekörpers 2 teilt dabei die rechteckförmig ausgebildete piezoelektrische Platte 1 so, daß sich zu beiden Seiten des stegartigen Vorsprunges 3 jeweils eine Hälfte 1a, 1b der piezoelektrischen Platte 1 befindet (vgl. hierzu insbesondere Fig. 4).

Mit ihren Rändern 4, die zu dem stegartigen Vorsprung 3 parallel verlaufen, ist die piezoelektrische Platte an den Haltearmen 5, die sich auf der Seite des Massekörpers 2 in Beschleunigungsrichtung 8 gesehen zu beiden Seiten dieses Körpers befinden, befestigt. Die Auflageflächen, die von den Haltearmen 5 und dem Massekörper 2 dabei für die piezoelektrische Platte 1 gebildet werden, liegen in einer Ebene parallel zur Beschleunigungsrichtung 8, so daß die piezoelektrische Platte 1 spannungsfrei an den Haltearmen 5 und dem Massekörper 2 bzw. an dem stegartigen Vorsprung 3 des Massekörpers 2 befestigt werden kann.

Die Anordnung von piezoelektrischer Platte 1 und Massekörper 2, sowie der Haltearme 5 bei dem Ausführungsbeispiel entsprechend Fig. 2 unterscheidet sich von der Anordnung dieser Teile in Fig. 1 nur dadurch, daß der Beschleunigungssensor entsprechend Fig. 1 zur Feststellung von Beschleunigungskräften, die rechtwinklig zur Basisplatte 11 wirksam sind, vorgesehen ist, während der Beschleunigungssensor entsprechend Fig. 2 auf Beschleunigungskräfte anspricht, die eine zur Basisplatte 11 parallele Richtung haben.

Zur Befestigung des Beschleunigungssensors an einem weiteren Konstruktionsteil ist in der Basisplatte 11 eine Gewindebohrung 14 vorgesehen.

Außerdem trägt die Basisplatte 11 eine Koax-Buchse 15, über die an der piezoelektrischen Platte 1 mit Hilfe von Elektroden 7 Potentialdifferenzen abgegriffen werden können. Dabei ist lediglich die vom Massekörper 2 abgewandte Elektrode 7, die die piezoelektrische Platte 1 auf dieser Seite ganzflächig bedeckt, durch einen gegenüber der Basisplatte 11 isolierten Abgriff 16 (Fig. 4) an den Innenleiter der Buchse 15 angeschlossen, während die beiden Elektroden der Plattenteile 1a, 1b zu beiden Seiten des stegartigen Vorsprungs 3 des Massekörpers 2 über die Masse der Haltearme 5, des Halteorganes 6 und die Basisplatte 1 mit dem Außenleiter der Buchse 15 verbunden sind. Die piezoelektrische Platte 1 hat bei einer solchen Anschlußweise in ihren Hälften 1a und 1b eine zueinander entgegengesetzte Polarisation.

Wird nämlich der Beschleunigungssensor in Richtung 8 beschleunigt, so bewirkt der Massekörper 2 in der einen Hälfte z.B. 1a der piezoelektrischen Platte 1 über den stegartigen Vorsprung 3 eine Zugspannung, dagegen in der anderen Hälfte z.B. 1b eine Druckspannung. Infolge der entgegengesetzten Polarisation der beiden Hälften hat dies jedoch Potentialdifferenzen mit gleicher Polungsrichtung zwischen den Elektrodenbelägen beider Hälften der Platte 1 zur Folge.

Dagegen bewirken Temperaturänderungen in beiden Plattenhälften 1a und 1b jeweils zugleich entweder Zug- oder Druckspannungen. Dadurch bewirkte Potentialdifferenzen zwischen den Elektrodenbelägen 7 der Platte 1 haben aber infolge der entgegengesetzten Polarisierung der

Hälften 1a und 1b entgegengesetzte Polarität. Infolge der Symmetrie des Aufbaus haben sie auch gleiche Größe und heben sich damit gegenseitig auf. Der sogenannte pyroelektrische Effekt wird dadurch kompensiert und kann sich nicht als Störung auswirken.

Durch den verminderten Querschnitt von Halteorgan 6, Massekörper 2 und Haltearm 5 gegenüber der Basisplatte 11 bildet diese einen Freirand 12, an dem eine Blechkappe 13 befestigt werden kann, z.B. durch Widerstandschweißung. Die Blechkappe 13 umgibt dabei die piezoelektrische Platte mit Massekörper 2, Haltearm 5 und Halteorgan 6 und schützt dadurch die wesentlichen Teile des Beschleunigungssensors vor schädlichen Umwelteinflüssen.

Durch die stegartige quer zur Beschleunigungsrichtung 8 verlaufende Befestigungszone 10 zwischen dem Massekörper 2 und dem Halteorgan 6, über die der Massekörper 2 einstückig mit dem Halteorgan 6 verbunden ist und deren Stärke durch die Einschnitte 9 bestimmt wird, ist sichergestellt, daß der Sensor nur auf Beschleunigungskräfte reagiert, die quer zur Befestigungszone 10 wirksam sind. In allen anderen Richtungen auftretende Beschleunigungskräfte werden durch die Befestigungszone 10 aufgefangen und können sich nicht durch eine Belastungsänderung, die von dem Massekörper 2 auf die piezoelektrische Platte 1 übertragen wird, bemerkbar machen.

7 Patentansprüche
4 Figuren

## Bezugszeichenliste

| 1 | piezoelektrische Platte (1a,1b Plattenhälften) |
| 2 | Massekörper |
| 3 | stegartiger Vorsprung |
| 4 | Befestigungsränder der Platte 1 |
| 5 | Haltearme |
| 6 | Halteorgan |
| 7 | Elektrodenbeläge der Platte 1 |
| 8 | Beschleunigungsrichtung |
| 9 | Einschnitte |
| 10 | Befestigungszone |
| 11 | Basisplatte |
| 12 | Freirand |
| 13 | Blechkappe |
| 14 | Gewindebohrung |
| 15 | Anschlußbuchse |
| 16 | Elektrodenabgriff |

Patentansprüche

1. Beschleunigungssensor mit einem zwischen einem Halteorgan und wenigstens einer mit Elektroden versehenen piezoelektrischen Platte aufgehängten Massekörper, der über quer zur Beschleunigungsrichtung verlaufende streifenförmige bzw. stegartige Befestigungszonen einerseits einstückig mit dem Halteorgan und andererseits mit der parallel zur Beschleunigungsrichtung angeordneten piezoelektrischen Platte verbunden ist, d a d u r c h g e k e n n z e i c h n e t , daß nur eine Befestigungszone (3) zwischen piezoelektrischer Platte (1) und Massekörper (2) in einer Symmetrieebene der Platte (1) vorgesehen ist.

2. Beschleunigungssensor nach Anspruch 1, d a d u r c h g e k e n n z e i c h n e t , daß die piezoelektrische Platte (1) an ihren zu der Befestigungszone (3) zwischen Platte (1) und Massekörper (2) parallelen Rändern (4) auf der Seite des Massekörpers (2) an auf dieser Seite vorgesehenen Haltearmen (5) des Halteorganes (6) fixiert ist.

3. Beschleunigungssensor nach Anspruch 2, d a d u r c h g e k e n n z e i c h n e t , daß die Haltearme (5) mit dem Halteorgan (6) einstückig ausgebildet sind.

4. Beschleunigungssensor nach einem der Ansprüche 2 oder 3, d a d u r c h g e k e n n z e i c h n e t, daß die piezoelektrische Platte (1) zwischen ihrer Befestigungszone (3) mit dem Massekörper (2) und ihren an den Haltearmen (5) fixierten Rändern (4) entgegengesetzte Polarisationsrichtungen aufweist und daß ein auf der vom Massekörper (2) abgewandten Seite (7) der piezoelektrischen Platte (1) vorgesehener Elektrodenbelag gegenüber den Haltearmen (5), dem Halteorgan (6)

0059793

und dem Massekörper (2) isoliert ausgebildet ist, während die Gegenelektroden mit den Haltearmen (5) bzw. dem Halteorgan (6) elektrisch verbunden sind.

5. Beschleunigungssensor nach Anspruch 3, d a d u r c h g e k e n n z e i c h n e t ,daß der sich zwischen dem Halteorgan (6) und der piezoelektrischen Platte (1) quer zur Beschleunigungsrichtung (8) keilförmig erweiternde Massekörper (2) lediglich durch schlitzförmige Einschnitte (9), die bis zur Befestigungszone (10) zwischen Massekörper (2) und Halteorgan (6) verlaufen, aus dem aus einem Metallklotz bestehenden Halteorgan unter Bildung der Haltearme (5) freigeschnitten ist.

6. Beschleunigungssensor nach Anspruch 5, d a d u r c h g e k e n n z e i c h n e t , daß das Halteorgan (6) eine Basisplatte (11) mit einem Freirand (12) aufweist und daß mit dem Freirand (12) eine Blechkappe (13) verbunden ist.

7. Beschleunigungssensor nach Anspruch 6, d a d u r c h g e k e n n z e i c h n e t , daß die Basisplatte (11) mit Befestigungsausnehmungen (14) und/oder Vorsprüngen, sowie mit einer Anschlußbuchse (15) versehen ist.

FIG 1

FIG 3

FIG 2

FIG 4

Europäisches
Patentamt

**EUROPÄISCHER RECHERCHENBERICHT**

| **EINSCHLÄGIGE DOKUMENTE** | | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | |
| A | US - A - 3 893 342 (FLORIAN et al.)  * Spalte 1, Zeilen 40-57; Spalte 2, Zeilen 19-39; Figur 1 *  -- | 1,2,7 | G 01 P 15/09 |
| A | FR - A - 2 192 306 (COMMISSARIAT A L'ENERGIE ATOMIQUE)  * Seite 2, Zeile 30 - Seite 3, Zeile 5; Figur 2 *  -- | 1,3,5 | |
| A | US - A - 3 453 457 (HAYER et al.)  * Spalte 3, Zeilen 26-71; Figur 1 *  -- | 1,5 | RECHERCHIERTE SACHGEBIETE (Int Cl.³)  G 01 P H 03 K |
| A,D | US - A - 3 899 698 (KLEINSCHMIDT)  * Spalte 7, Zeilen 14-27; Figur 8 *  -- | 1 | |
| A | GB - A - 1 078 228 (KISTLER INSTR.)  * Seite 3, Zeilen 12-33; Figur 6 * | 6,7 | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsatze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-03-1982 | HANSEN |

EPA form 1503.1  06.78